# EUROPEAN PATENT APPLICATION

(11) **EP 3 979 691 A1**
(43) Date of publication of application: **06.04.2022**
(21) Application number: 20822970.8
(22) Date of filing: 09.04.2020
(51) Int. Cl.: H04W 24/04

(54) **METHOD AND APPARATUS FOR RESTORING NETWORK QUALITY**

(30) Priority: 10.06.2019 CN 201910498445
(71) Applicant: ZTE Corporation, Shenzhen, Guangdong 518057 (CN)
(72) Inventor: GU, Shiping, Shenzhen, Guangdong 518057 (CN)
(74) Representative: Canzler & Bergmeier Patentanwälte Partnerschaft mbB
(86) International application number: PCT/CN2020/083910
(87) International publication number: WO 2020/248683

(57) **Abstract**

Provided are a method and apparatus for restoring network quality. The method comprises: for each KPI in a pre-set first correlation between KPIs and a first constraint condition, determining whether the KPI meets the first constraint condition corresponding to the KPI; and in response to a determination that in the first correlation, there is at least one KPI that does not meet the first constraint condition respectively corresponding to the at least one KPI, and according to a pre-set second correlation between a second configuration parameter and a second constraint condition and to whether the value of a first configuration parameter in a network element area is the same as the value thereof in network management, performing network quality restoration processing.

## Description

### TECHNICAL FIELD

The present disclosure relates to, but is not limited to, the field of communication technology.

### BACKGROUND

There are many reasons for causing quality deterioration of a 5G cellular mobile communication network. It is found in daily operation and maintenance that network quality is closely related to system configuration parameters, and deterioration of the network quality often results from improper modification of the configuration parameters in many times, which usually requires a maintainer to manually analyze the modified configuration parameters and then correct the related configuration parameters to restore the network, which is time-consuming and labor-consuming.

### SUMMARY

An aspect of an embodiment of the present disclosure provides a method for restoring network quality, including: for each Key Performance Indicator (KPI) in a pre-set first correlation between KPIs and first constraint conditions, determining whether the KPI satisfies a first constraint condition corresponding to the KPI; and performing, in response to determining that at least one KPI not satisfying a first constraint condition respectively corresponding to the at least one KPI exists in the first correlation, a network quality recovery process, according to a pre-set second correlation between a second configuration parameter and a second constraint condition, and whether a value of a first configuration parameter in a network element area is the same as a value of the first configuration parameter in a network management or not.

Another aspect of the embodiment of the present disclosure provides an apparatus for restoring network quality, including a processor and a computer-readable storage medium having an instruction stored therein. When the instruction is executed by the processor, the above method for restoring network quality is implemented.

Another aspect of the embodiment of the present disclosure provides a computer-readable storage medium having a computer program stored thereon. When the computer program is executed by a processor, steps of the above method of restoring network quality are implemented.

Another aspect of the embodiment of the present disclosure provides an apparatus for restoring network quality, including: a determining module configured to determine whether each KPI in a pre-set first correlation between KPIs and first constraint conditions satisfies a first constraint condition corresponding to the KPI; and a network quality processing module configured to perform, in response to determining that at least one KPI not satisfying a first constraint condition respectively corresponding to the at least one KPI exists in the first correlation, a network quality recovery process, according to a pre-set second correlation between a second configuration parameter and a second constraint condition, and whether a value of a first configuration parameter in a network element area is the same as a value of the first configuration parameter in a network management or not.

### BRIEF DESCRIPTION OF THE DRAWINGS

The accompanying drawings are used to provide a further understanding for the technical solution of the embodiment of the present disclosure, constitute a part of the specification, and are used to explain the technical solution of the embodiment of the present disclosure together with the embodiment of the present application, but do not constitute a limitation to the technical solution of the present disclosure.
Fig. 1 is a flowchart illustrating a method for restoring network quality according to the embodiment of the present disclosure.
Fig. 2 is a schematic diagram of a structure of an apparatus for restoring network quality according to the embodiment of the present disclosure.

### DETAILED DESCRIPTION

Hereinafter, the embodiment of the present disclosure will be described in detail with reference to the accompanying drawings. It should be noted that, in the present disclosure, the embodiment and features of the embodiment may be arbitrarily combined with each other without conflict.

Steps shown in the flowchart of the accompanying drawings may be executed in a computer system such as a set of computer-executable instructions. In addition, although a logical sequence is shown in the flowchart, in some cases, the steps shown or described may be performed in a sequence other than the sequence shown herein.

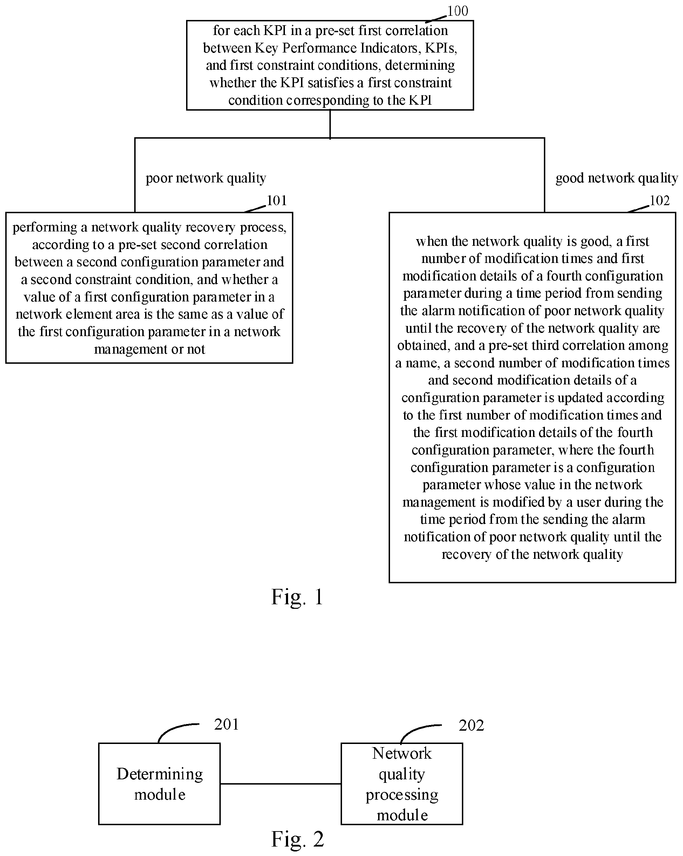

As shown in Fig. 1, which is a flowchart illustrating a method for restoring network quality according to the embodiment of the present disclosure, the method include step 100 and step 101.

In step 100, for each KPI in a pre-set first correlation between KPIs and first constraint conditions, it is determined whether the KPI satisfies the first constraint condition corresponding to the KPI or not.

According to the embodiment provided by the present disclosure, the first correlation may further include: an amount, N, of observed granularity periods, N is an integer greater than or equal to 1, e.g., N = 3.

In an exemplary example, the first correlation may be implemented in a model-driving manner. An advantage of model-driving enables fast online usage by modifying a model without interrupting a service.

In an exemplary example, the first correlation may also not be implemented in the model-driving manner, and the embodiment of the present disclosure does not limit a specific implement manner of the first correlation, and the specific implement manner is not used to limit the protection scope of the embodiment of the present disclosure. For example, the first correlation may also be implemented by a network performance model, which includes the first correlation.

According to the embodiment provided by the present disclosure, the KPI in the first correlation may include: a handover success rate, an access success rate and/or an empty packet loss rate. The first constraint condition corresponding to the handover success rate may be greater than or equal to a first threshold (e.g., 95%), the first constraint condition corresponding to the access success rate may be greater than or equal to a second threshold (e.g., 98%), and/or the first constraint condition corresponding to the empty packet loss rate may be less than or equal to a third threshold (e.g., 15%).

According to the embodiment provided by the disclosure, it is indicated that network quality is good when each KPI in the first correlation satisfies the first constraint condition corresponding to the KPI, and it is indicated that the network quality is poor when at least one KPI in the first correlation does not satisfy the first constraint condition corresponding to the KPI.

According to the embodiment provided by the present disclosure, when determining whether one KPI satisfies the first constraint condition corresponding to the one KPI, an average value of the one KPI in N granularity periods, that is, Vmean = (V₁ + V₂+ ... + V_{N})/N, may be obtained.

For example, when N =3, values of the handover success rate obtained within 3 granularity periods are: 95%, 98% and 94%, respectively, the average value of the handover success rate is 95.67% which is greater than 95% of the first threshold value, thus the first constraint condition corresponding to the handover success rate is satisfied; values of the access success rate obtained within the 3 granularity periods are: 92%, 95% and 93%, respectively, the average value of the access success rate is 93.33% which is smaller than 98% of the second threshold value, thus the first constraint condition corresponding to the access success rate is not satisfied; values of the empty packet loss rate obtained within the 3 granularity periods are: 15%, 10% and 8%, respectively, the average value of the empty packet loss rate is 11% which is less than 15% of the third threshold value, thus the first constraint condition corresponding to the empty packet loss rate is satisfied. Since the access success rate does not satisfy the corresponding first constraint condition, a conclusion of poor network quality is obtained.

In step 101, when at least one KPI which does not satisfy the first constraint condition corresponding to the KPI exists in the first correlation, a network quality recovery process is performed according to a pre-set second correlation between a second configuration parameter and a second constraint condition, and whether a value of a first configuration parameter in a network element area is the same as a value of the first configuration parameter in a network management or not.

According to the embodiment provided by the disclosure, after a maintainer fight and successfully regulate and test a network, some configuration parameters should specified with values or value ranges due to particularity thereof, so that adverse effects on the network quality can be generated in case of improper change of the configuration parameters, therefore, the maintainer can restrict the values of the configuration parameters by setting the second correlation, thereby generating good effects on the network quality.

According to the embodiment provided by the present disclosure, the second constraint conditions may be any kind of: an unconditional default value, an unconditional value range, a default value with a condition, or a value range with a condition.

In an exemplary example, the second correlation may be implemented in the model-driving manner. The advantage of model-driving enables fast online usage by modifying the model without interrupting the service.

In an exemplary example, the second correlation may also be implemented without the model-driving manner, and a specific implement manner of the second correlation is not limited in the embodiment of the present disclosure, and the specific implement manner is also not used to limit the protection scope of the embodiment of the present disclosure. For example, the second correlation may be implemented by a network configuration parameter model, which may include the second correlation.

According to the embodiment provided by the present disclosure, the second configuration parameter in the second correlation may include: a Physical Cell Identifier (PCI), a maximum UE transmitting power, and/or a Quality of Service (QoS) Differentiated Service Code Point (DSCP) mapped DSCP. The second constraint condition corresponding to the PCI may ranges from 0 to 256 (i.e., the unconditional value range). The second constraint corresponding to the maximum UE transmitting power may be a default value of 23 (i.e., the unconditional default value). The second constraint condition corresponding to the QoS DSCP mapped DSCP may be: when a QoS Class Identifier (QCI) is equal to 1, a default value of the DSCP is 24; when the QCI is equal to 6, the default value of the DSCP is 0 (i.e., the default value with the condition).

According to the embodiment provided by the present disclosure, performing the network quality recovery process according to the pre-set second correlation between the second configuration parameter and the second constraint condition and whether the value of the first configuration parameter in the network element area is the same as the value of the first configuration parameter in the network management may include any one or more of a manner (1) and a manner (2).

In the manner (1), for each first configuration parameter, when the value of the first configuration parameter in the network element area is different from the value of the first configuration parameter in the network management, or when the second configuration parameter includes the first configuration parameter and the value of the first configuration parameter in the network element area or the value of the first configuration parameter in the network management does not pass verification of the second constraint condition corresponding to the first configuration parameter, the value of the first configuration parameter in the network element area and/or the value of the first configuration parameter in the network management are/is modified, so that the value of the first configuration parameter in the network element area is the same as the value of the first configuration parameter in the network management, and the value of the first configuration parameter in the network element area and the value of the first configuration parameter in the network management can pass the verification of the second constraint condition corresponding to the first configuration parameter when the second configuration parameter includes the first configuration parameter.

In the manner (2), when values of all first configuration parameters in the network element area are the same as values of all the first configuration parameters in the network management and all the first configuration parameters satisfy a pre-set condition, an alarm notification of poor network quality is issued. The pre-set condition may include: the second configuration parameter does not include the first configuration parameter; or the second configuration parameter includes the first configuration parameter, and the value of the first configuration parameter in the network element area and the value of the first configuration parameter in the network management can pass the verification of the second constraint condition corresponding to the first configuration parameter. When a value of the second configuration parameter in the network element area can pass verification of a second constraint condition corresponding to the second configuration parameter, the network quality is well affected.

According to the embodiment provided by the present disclosure, a case where the value of the first configuration parameter in the network element area or the value of the first configuration parameter in the network management passes the verification of the second constraint condition corresponding to the first configuration parameter includes any one or more of the following: the second constraint condition corresponding to the first configuration parameter is the unconditional default value, and the value of the first configuration parameter in the network element area or the value of the first configuration parameter in the network management is equal to the default value; the second constraint condition corresponding to the first configuration parameter is the unconditional value range, and the value of the first configuration parameter in the network element area or the value of the first configuration parameter in the network management area is in the value range; the second constraint condition corresponding to the first configuration parameter is the default value with the condition, the condition is satisfied, and the value of the first configuration parameter in the network element area or the value of the first configuration parameter in the network management is equal to the default value; the second constraint condition corresponding to the first configuration parameter is the value range with a condition, the condition is satisfied, and the value of the first configuration parameter in the network element area or the value of the first configuration parameter in the network management area is in the value range.

According to the embodiment provided by the present disclosure, a case where the value of the first configuration parameter in the network element area or the value of the first configuration parameter in the network management does not pass the second constraint condition corresponding to the first configuration parameter includes any one or more of the following: the second constraint condition corresponding to the first configuration parameter is the unconditional default value, and the value of the first configuration parameter in the network element area or the value of the first configuration parameter in the network management area is unequal to the default value; the second constraint condition corresponding to the first configuration parameter is the unconditional value range, and the value of the first configuration parameter in the network element area or the value of the first configuration parameter in the network management area is not in the value range; the second constraint condition corresponding to the first configuration parameter is the default value with the condition, the condition is satisfied, and the value of the first configuration parameter in the network element area or the value of the first configuration parameter in the network management is unequal to the default value; the second constraint condition corresponding to the first configuration parameter is the default value with the condition, and the condition is not satisfied; the second constraint condition corresponding to the first configuration parameter is the value range with a condition, the condition is satisfied, and the value of the first configuration parameter in the network element area or the value of the first configuration parameter in the network management area is not in the value range.

According to the embodiment provided by the disclosure, modifying the value of the first configuration parameter in the network element area and the value of the first configuration parameter in the network management area includes any one or more of the following manners (1) to (3).

In the manner (1), when the value of the first configuration parameter in the network element area is different from the value of the first configuration parameter in the network management and the first configuration parameter satisfies the pre-set condition, the value of the first configuration parameter in the network management is modified to be the value of the first configuration parameter in the network element area. The pre-set condition includes that: the second configuration parameter does not include the first configuration parameter; or the second configuration parameter includes the first configuration parameter and the value of the first configuration parameter in the network element area passes the verification of the second constraint condition corresponding to the first configuration parameter.

In the manner (2), when the value of the first configuration parameter in the network element area is different from the value of the first configuration parameter in the network management, the second configuration parameter includes the first configuration parameter, the value of the first configuration parameter in the network element area does not pass the verification of the second constraint condition corresponding to the first configuration parameter, and the value of the first configuration parameter in the network management passes the verification of the second constraint condition corresponding to the first configuration parameter, the value of the first configuration parameter in the network element area is modified to be the value of the first configuration parameter in the network management.

In the manner (3), when the second configuration parameter includes the first configuration parameter, and neither the value of the first configuration parameter in the network element area nor the value of the first configuration parameter in the network management passes the verification of the second constraint condition corresponding to the first configuration parameter, both the value of the first configuration parameter in the network element area and the value of the first configuration parameter in the network management are modified to be a value that can pass the verification of the second constraint condition corresponding to the first configuration parameter.

According to embodiment provided by the present disclosure, the method may further include: a change record of the first configuration parameter is stored.

According to the embodiment provided by the present disclosure, the change record of the first configuration parameter may include: a name and modification details of the first configuration parameter. The modification details include: the value of the first configuration parameter in the network management before being modified and the value of the first configuration parameter in the network management after being modified.

According to the embodiment provided by the present disclosure, the change record of the first configuration parameter may further include: modification time.

For example, a value of a Control Format Indicator (CFI, which is used to indicate an amount of symbols occupied by a channel in a subframe) in the network element area is 1, a value of the PCI in the network element area is 200, and a value of the maximum UE transmitting power in the network element area is 23; a value of the CFI in the network management is 2, a value of the PCI in the network management is 100, and a value of the maximum UE transmitting power in the network management is 23. It can be seen that the value of the CFI in the network element area is different from the value of the CFI in the network management, and the second configuration parameter does not include the CFI, thus the value of the CFI in the network management is modified to be 1; the value of the PCI in the network element area is different from the value of the PCI in the network management, the second configuration parameter includes the PCI, the second constraint condition corresponding to the PCI is an unconditional value range of 0 - 256, and the value of the PCI in the network element area passes the verification of the second constraint condition corresponding to the PCI, thus the value of the PCI in the network management is modified to be 200; the value of the maximum UE transmitting power in the network element area is the same as the value of the maximum UE transmitting power in the network management, the second configuration parameter includes the maximum UE transmitting power, the second constraint condition corresponding to the maximum UE transmitting power is an unconditional default value of 23, the value of the maximum UE transmitting power in the network element area passes the verification of the second constraint condition corresponding to the maximum UE transmitting power, thus the value of the maximum UE transmitting power in the network element area and the value of the maximum UE transmitting power in the network management do not need to be modified.

A change record of the CFI is: modification time: 20: 20: 20 on April 20, 2018; "CFI": 1 → 2. A change record of the PCI is: modification time: 20: 20: 20 on April 20, 2018; the "PCI": 200 → 100.

For another example, the value of the CFI value in the network element area is 1, the value of the PCI in the network element area is 200, and the value of the maximum UE transmitting power in the network element area is 21; the value of the CFI in the network management is 2, the value of the PCI in the network management is 100, and the value of the maximum UE transmitting power in the network management is 23. It can be seen that the value of the CFI in the network element area is different from the value of the CFI in the network management, and the second configuration parameter does not include the CFI, thus the value of the CFI in the network management is modified to be 1; the value of the PCI in the network element area is different from the value of the PCI in the network management, the second configuration parameter includes the PCI, the second constraint condition corresponding to the PCI is the unconditional value range of 0 - 256, and the value of the PCI in the network element area passes the verification of the second constraint condition corresponding to the PCI, thus the value of the PCI in the network management is modified to be 200; the value of the maximum UE transmitting power in the network element area is different from the value of the maximum UE transmitting power in the network management, the second configuration parameter includes the maximum UE transmitting power, the second constraint condition corresponding to the maximum UE transmitting power is the unconditional default value of 23, the value of the maximum UE transmitting power in the network element area does not pass the verification of the second constraint condition corresponding to the maximum UE transmitting power, and the value of the maximum UE transmitting power in the network management passes the verification of the second constraint condition corresponding to the maximum UE transmitting power, thus the value of the maximum UE transmitting power in the network element area is modified to be 23.

The change record of the CFI change is: modification time: 20: 20: 20 at April 20, 2018; "CFI": 1 → 2. The change record of the PCI is: modification time: 20: 20: 20 at April 20, 2018; the "PCI": 200 → 100. A change record of the maximum UE transmitting power is: modification time: 20: 20: 20 at April 20, 2018; "maximum UE transmitting power": 21 → 23.

According to the method for recovering the network quality provided by the embodiment of the disclosure, the network quality can be determined based on the first correlation, and when the network quality is poor, the network quality recovery process is performed based on the second correlation, thereby realizing intelligent recovery of the network quality, and saving labor and time costs.

According to the embodiment provided by the present disclosure, the method may further include step 102.

In step 102, when each KPI in the first correlation satisfies the first constraint condition corresponding to the KPI, a first number of modification times and first modification details of a fourth configuration parameter during a time period from sending the alarm notification of poor network quality until the recovery of the network quality are obtained, and a pre-set third correlation among a name, a second number of modification times and second modification details of a configuration parameter is updated according to the first number of modification times and the first modification details of the fourth configuration parameter. The fourth configuration parameter is a configuration parameter whose value in the network management is modified by a user during the time period from the sending the alarm notification of poor network quality until the recovery of the network quality.

According to the embodiment provided by the disclosure, the first modification detail and the second modification detail include a name of the fourth configuration parameter corresponding to each time of modification, a value of the fourth configuration parameter in the network management before being modified and the value of the fourth configuration parameter in the network management after being modified.

According to the embodiment provided by the present disclosure, the obtaining the first number of modification times and the first modification details of the fourth configuration parameter during the time period from sending the alarm notification of poor network quality until the recovery of the network quality may include: obtaining a change record of the fourth configuration parameter during the time period from sending the alarm notification of poor network quality until the recovery of the network quality; and determining the first number of modification times and the first modification details of the fourth configuration parameter according to the change record of the fourth configuration parameter.

According to the embodiment provided by the present disclosure, updating the pre-set third correlation among the name, the second number of modification times, and the second modification details of the configuration parameter according to the first number of modification times and the first modification details of the fourth configuration parameter may include any one or more of the following manners (1) and (2).

In the manner (1), when the configuration parameter in the third correlation includes the fourth configuration parameter, the first number of modification times is added to the second number of modification times corresponding to the fourth configuration parameter in the third correlation, and the first modification details corresponding to the fourth configuration parameter are added to the second modification details corresponding to the fourth configuration parameter.

In the manner (2), when the configuration parameter in the third correlation does not include the fourth configuration parameter, a correlation among the name, the first number of modification times, and the first modification details of the fourth configuration parameter is added to the third correlation.

For example, assuming that there is the alarm notification of poor network quality currently, the alarm notification occurs at 20: 20: 20, April 28, 2018, and the change record of the fourth configuration parameter in the time period from sending the alarm notification of poor network quality until the recovery of the network quality is: (1) modification time: 20: 20: 20, April 20, 2018; "PCI": 200 → 100; (2) modification time: 20: 20: 20, April 20, 2018; "CFI": 1 → 2; (3) modification time: 10: 10: 10, April 21, 2018; "PCI": 100 → 150; (4) modification time: 10:10:10, April 21, 2018; "CFI": 2 → 3; (5) modification time: 09: 09: 09, April 22, 2018; "PCI": 150 → 60. The current modified frequency table (i.e., the third correlation) is shown in Table 1.

**Table 1**

| Name of configuration parameter | Second number of modification times | Second modification details |
|---|---|---|
| Duration of UE inactive timer | 3 | 20s → 23s, 23s → 15s, 15s → 16s |
| PCI | 2 | 100 → 200, 200 → 205 |

It can be seen from the above change record of the fourth configuration parameter, the first number of modification times of the PCI is 3 times, and the first modification details re: 200 → 100, 100 → 150, 150 → 60; the first number of modification times of the CFI is 2, and the first modification details are: 1 → 2, 2 → 3. Since the frequency table shown in Table 1 includes the PCI, the second number of modification times of the PCI in Table 1 is modified to be 5 times. Since no CFI is included in the frequency table shown in Table 1, a modification situation of the CFI is added to the frequency table as shown in Table 1, which is shown in Table 2.

**Table 2**

| Name of configuration parameter | Second number of modification times | Second modification details |
|---|---|---|
| Duration of UE inactive timer | 3 | 20s → 23s, 23s → 15s, 15s → 16s |
| PCI | 5 | 100 → 200, 200 → 205, 200 → 100, 100 → 150, 150 → 60 |
| CFI | 2 | 1 → 2, 2 → 3 |

According to embodiment provided by the present disclosure, the method may further include: when modification of a value of a third configuration parameter in the network management is monitored, whether the modification of the value of the third configuration parameter in the network management is effective or not is determined according to whether the second configuration parameter in the second correlation includes the third configuration parameter.

According to the embodiment provided by the present disclosure, when the modification of the value of the third configuration parameter in the network management is effective, the method may further include: a change record of the third configuration parameter is stored; alternatively, when the modification of the third configuration parameter is not effective, the method may further include: the user is notified that the modification of the value of the third configuration parameter in the network management violates the second correlation.

According to the embodiment provided by the present disclosure, the change record of the third configuration parameter may include: name and modification details of the third configuration parameter. The modification details may include: the value of the third configuration parameter in the network management before being modified and the value of the third configuration parameter in the network management after being modified.

According to the embodiment provided by the present disclosure, the change record of the third configuration parameter may further include: modification time.

For example, it assumes that the user changes the value of the CFI in the network management from 1 to 2 and changes the value of the PCI in the network management from 15 to 40, the change record of the CFI is: modification time: 20: 20: 20, April 20, 2018; "CFI": 1 → 2. Change record of the PCI is: modification time: 20: 20: 20, April 20, 2018; the "PCI": 15 → 40.

According to the embodiment provided by the present disclosure, determining whether the modification of the value of the third configuration parameter in the network management is effective or not according to whether the second configuration parameter in the second correlation includes the third configuration parameter may include any one or more of the following manners (1) and (2).

In the manner (1), when the second configuration parameter does not include the third configuration parameter; or when the second configuration parameter includes the third configuration parameter and the modification of the value of the third configuration parameter in the network management passes the verification of the second constraint condition corresponding to the third configuration parameter, it is determined that the modification of the value of the third configuration parameter in the network management is effective. For example, it is assumed that the user modifies the value of the CFI in the network management from 1 to 2, and modifies the value of the PCI in the network management from 15 to 40, since the second configuration parameter does not include the CFI, it is not necessary to perform the verification of the second constraint condition, and the modification of the value of the CFI in the network management is effective; since the second configuration parameter includes the PCI, the verification of the second constraint condition needs to be performed, and the second constraint condition corresponding to the PCI in the second correlation is the value range of 0 - 256, it needs to be verified whether the value of the modified PCI in the network management is in the range of 0 to 256, and since the value of the modified PCI in the network management is 40, it indicates that the value of the modified PCI in the network management is in the range of 0 to 256, that is, the verification of the second constraint condition is passed, and the modification of the value of the PCI in the network management is effective.

In the manner (2), when the second configuration parameter includes the third configuration parameter and the modification of the value of the third configuration parameter in the network management does not pass the verification of the second constraint condition corresponding to the third configuration parameter, it is determined that the modification of the value of the third configuration parameter in the network manager is not effective.

According to the embodiment provided by the present disclosure, a case where the modification of the value of the third configuration parameter in the network management passes the verification of the second constraint condition corresponding to the third configuration parameter may include any one or more of the following: the second constraint condition corresponding to the third configuration parameter is the unconditional default value, and the modified value of the third configuration parameter in the network management is equal to the default value; the second constraint condition corresponding to the third configuration parameter is the unconditional value range, and the modified value of the third configuration parameter in the network management is in the value range; the second constraint condition corresponding to the third configuration parameter is the default value with the condition, the condition is satisfied, and the modified value of the third configuration parameter in the network management is equal to the default value; the second constraint condition corresponding to the third configuration parameter is the value range with the condition, the condition is satisfied, and the modified value of the third configuration parameter in the network management is in the value range. A case where the modification of the value of the third configuration parameter in the network management does not pass the verification of the second constraint condition corresponding to the third configuration parameter includes any one or more of the following: the second constraint condition corresponding to the third configuration parameter is the unconditional default value, and the modified value of the third configuration parameter in the network management is unequal to the default value; the second constraint condition corresponding to the third configuration parameter is the unconditional value range, and the modified value of the third configuration parameter in the network management is not in the value range; the second constraint condition corresponding to the third configuration parameter is the default value with the condition, the condition is satisfied, and the modified value of the third configuration parameter in the network management is unequal to the default value; the second constraint condition corresponding to the third configuration parameter is the default value with the condition, and the condition is not satisfied; the second constraint condition corresponding to the third configuration parameter is the value range with a condition, the condition is satisfied, and the modified value of the third configuration parameter in the network management is not in the value range.

For example, it is assumed that the user modifies the value of the CFI in the network management to be 1, modifies the value of the PCI in the network management to be 200, modifies the value of the maximum UE transmitting power in the network management to be 23, modifies the value of the QoS DSCP mapped DSCP in the network management to be 20, and modifies the value of the QoS DSCP mapped QCI in the network management to be 6, since the second configuration parameter does not include the CFI, the verification of the second constraint condition is not required, and the modification of the value of the CFI in the network management is effective; since the second configuration parameter includes the PCI, the verification of the second constraint condition is required, the second constraint condition corresponding to the PCI in the second correlation is the unconditional value range of 0 - 256, and since the value modified by the user is 200, the verification is passed in the unconditional value range, and the modification of the value of the PCI in the network management is effective; since the second configuration parameter includes the maximum UE transmitting power, the verification of the second constraint condition is required, the second constraint condition corresponding to the maximum UE transmitting power in the second correlation is the unconditional default value of 23, the value modified by the user is 23, the two values are consistent with each other, the verification is passed, and the modification of the value of the maximum UE transmitting power in the network manager is effective; since the second configuration parameter includes the QoS DSCP mapped DSCP, the verification of the second constraint condition is required, and the second constraint condition corresponding to the QoS DSCP mapped DSCP in the second correlation is the default value with the condition, that is, when the QCI is equal to 1, the default value of the DSCP is 24, and when QCI is equal to 6, the default value of the DSCP is 0, then, when QCI is equal to 0, the default value of the DSCP is 6, and the value modified by the user is 20, the two values are not consistent with each other, the verification is not passed, and the modification of the value of the QoS DSCP mapped DSCP in the network management is not effective; since the second configuration parameter does not include the QoS DSCP mapped QCI, the verification of the second constraint condition is not required, and the modification of the value of the QoS DSCP mapped QCI in the network management is effective.

According to the method for recovering the network quality provided by the embodiment of the disclosure, with respect to each KPI in the pre-set first correlation between the KPI and the first constraint condition, whether the KPI satisfies the first constraint condition corresponding to the KPI is determined; when the first correlation has at least one KPI which does not satisfy the first constraint condition corresponding to the at least one KPI, the network quality recovery process is performed according to the pre-set second correlation between the second configuration parameter and the second constraint condition and whether the value of the first configuration parameter in the network element area is the same as the value of the first configuration parameter in the network management; when the first correlation has at least one KPI which does not satisfy the first constraint condition corresponding to the KPI, the network quality is poor, and the network quality recovery process can be carried out based on the second correlation, thereby realizing the intelligent recovery of the network quality and saving the labor and time costs.

In addition, the first correlation and the second correlation can be realized in the model-driving manner, so that fast online usage can be realized by modifying the model without interrupting the service.

The embodiment of the present disclosure further provides an apparatus for restoring network quality, which may include a processor and a computer-readable storage medium having an instruction stored therein, and when the instruction is executed by the processor, the above-mentioned method for restoring network quality is implemented.

The embodiment of the present disclosure further provides a computer-readable storage medium having a computer program stored thereon, and when the computer program is executed by a processor, the steps of the above method for restoring network quality are implemented.

As shown in Fig. 2, which is a schematic diagram of a structure of another apparatus for restoring network quality according to the embodiment of the present disclosure, the apparatus for restoring network quality include a determining module 201 and a network quality processing module 202.

The determining module 201 is configured to determine, for each KPI in a pre-set first correlation between a KPI and a first constraint condition, whether the KPI satisfies the first constraint condition corresponding to the KPI or not.

The network quality processing module 202 is configured to, when at least one KPI which does not satisfy the first constraint condition corresponding to the KPI exits in the first correlation, perform a network quality recovery process, according to a pre-set second correlation between a second configuration parameter and a second constraint condition, and whether a value of a first configuration parameter in a network element area is the same as a value of the first configuration parameter in a network management or not.

According to the embodiment provided by the present disclosure, the network quality processing module 202 may be further configured to determine, when modification of a value of a third configuration parameter in the network management is monitored, whether the modification of the value of the third configuration parameter in the network management is effective or not, according to whether the second configuration parameter in the second correlation includes the third configuration parameter.

According to the embodiment provided by the present disclosure, the network quality processing module 202 may be further configured to: when the modification of the value of the third configuration parameter in the network management is effective, store a change record of the third configuration parameter; or when the modification of the third configuration parameter is not effective, notify a user that the modification of the value of the third configuration parameter in the network management violates the second correlation.

According to the embodiment provided by the present disclosure, the network quality processing module 202 may be specifically configured to determine whether the modification of the value of the third configuration parameter in the network management is effective or not, according to whether the second configuration parameter in the second correlation includes the third configuration parameter, by using any one or more of the following manners: when the second configuration parameter does not include the third configuration parameter, or when the second configuration parameter includes the third configuration parameter and the modification of the value of the third configuration parameter in the network management passes verification of the second constraint condition corresponding to the third configuration parameter, it is determined that the modification of the value of the third configuration parameter in the network management is effective; when the second configuration parameter includes the third configuration parameter and the modification of the value of the third configuration parameter in the network management does not pass the verification of the second constraint condition corresponding to the third configuration parameter, it is determined that the modification of the value of the third configuration parameter in the network management is not effective.

According to the embodiment provided by the present disclosure, a case where the modification of the value of the third configuration parameter in the network management system passes the verification of the second constraint condition corresponding to the third configuration parameter may include any one or more of the following: the second constraint condition corresponding to the third configuration parameter is an unconditional default value, and the modified value of the third configuration parameter in the network management is equal to the default value; the second constraint condition corresponding to the third configuration parameter is an unconditional value range, and the modified value of the third configuration parameter in the network management is in the value range; the second constraint condition corresponding to the third configuration parameter is a default value with a condition, the condition is satisfied, and the modified value of the third configuration parameter in the network management is equal to the default value; the second constraint condition corresponding to the third configuration parameter is a value range with a condition, the condition is satisfied, and the modified value of the third configuration parameter in the network management is in the value range.

According to the embodiment provided by the present disclosure, a case where the modification of the value of the third configuration parameter in the network management does not pass the verification of the second constraint condition corresponding to the third configuration parameter includes any one or more of the following: the second constraint condition corresponding to the third configuration parameter is the unconditional default value, and the modified value of the third configuration parameter in the network management is unequal to the default value; the second constraint condition corresponding to the third configuration parameter is the unconditional value range, and the modified value of the third configuration parameter in the network management is not in the value range; the second constraint condition corresponding to the third configuration parameter is the default value with the condition, the condition is satisfied, and the modified value of the third configuration parameter in the network management is unequal to the default value; the second constraint condition corresponding to the third configuration parameter is the default value with the condition, and the condition is not satisfied; the second constraint condition corresponding to the third configuration parameter is the value range with the condition, the condition is satisfied, and the modified value of the third configuration parameter in the network management is not in the value range.

According to the embodiment provided by the present disclosure, the network quality processing module 202 may be specifically configured to implement, by using any one or more of the following manners (1) and (2), the network recovery process according to the pre-set second correlation between the second configuration parameter and the second constraint condition and whether the value of the first configuration parameter in the network element area is the same as the value of the first configuration parameter in the network management.

In the manner (1), for each first configuration parameter, when the value of the first configuration parameter in the network element area is different from the value of the first configuration parameter in the network management, or when the second configuration parameter includes the first configuration parameter and the value of the first configuration parameter in the network element area or the value of the first configuration parameter in the network management does not pass the verification of the second constraint condition corresponding to the first configuration parameter, the value of the first configuration parameter in the network element area and/or the value of the first configuration parameter in the network management are/is modified, so that the value of the first configuration parameter in the network element area is the same as the value of the first configuration parameter in the network management, and the value of the first configuration parameter in the network element area and the value of the first configuration parameter in the network management can pass the verification of the second constraint condition corresponding to the first configuration parameter when the second configuration parameter includes the first configuration parameter.

In the manner (2), when values of all first configuration parameters in the network element area are the same as values of all the first configuration parameters in the network management and all the first configuration parameters satisfy a pre-set condition, an alarm notification of poor network quality is issued. The pre-set condition may include: the second configuration parameter does not include the first configuration parameter; or the second configuration parameter includes the first configuration parameter, and the value of the first configuration parameter in the network element area and the value of the first configuration parameter in the network management can pass the verification of the second constraint condition corresponding to the first configuration parameter.

When a value of the second configuration parameter in the network element area passes verification of a second constraint condition corresponding to the second configuration parameter, the network quality is well affected.

According to the embodiment provided by the present disclosure, the network quality processing module 202 may be specifically configured to implement the modifying of the value of the first configuration parameter in the network element area and the value in the network management by adopting any one or more of the following manners (1) to (3).

In the manner (1), when the value of the first configuration parameter in the network element area is different from the value of the first configuration parameter in the network management and the first configuration parameter satisfies the pre-set condition, the value of the first configuration parameter in the network management is modified to be the value of the first configuration parameter in the network element area. The pre-set condition includes that: the second configuration parameter does not include the first configuration parameter; or the second configuration parameter includes the first configuration parameter and the value of the first configuration parameter in the network element area passes the verification of the second constraint condition corresponding to the first configuration parameter.

In the manner (2), when the value of the first configuration parameter in the network element area is different from the value of the first configuration parameter in the network management, the second configuration parameter includes the first configuration parameter, the value of the first configuration parameter in the network element area does not pass the verification of the second constraint condition corresponding to the first configuration parameter, and the value of the first configuration parameter in the network management passes the verification of the second constraint condition corresponding to the first configuration parameter, the value of the first configuration parameter in the network element area is modified to be the value of the first configuration parameter in the network management.

In the manner (3), when the second configuration parameter includes the first configuration parameter, and neither the value of the first configuration parameter in the network element area nor the value of the first configuration parameter in the network management passes the verification of the second constraint condition corresponding to the first configuration parameter, both the value of the first configuration parameter in the network element area and the value of the first configuration parameter in the network management are modified to be a value that can pass the verification of the second constraint condition corresponding to the first configuration parameter.

According to embodiment provided by the present disclosure, the network quality processing module 202 may be further configured to: when each KPI in the first correlation satisfies the first constraint condition corresponding to the KPI, obtain a first number of modification times and first modification details of a fourth configuration parameter in a time period from sending the alarm notification of poor network quality until the recovery of the network quality, and update a pre-set third correlation among a name, a second number of modification times and second modification details of a configuration parameter according to the first number of modification times and the first modification details of the fourth configuration parameter. The fourth configuration parameter is a configuration parameter whose value in the network management is modified by a user during the time period from sending the alarm notification of poor network quality until the recovery of the network quality.

According to the embodiment provided by the present disclosure, the network quality processing module 202 may be specifically configured to implement the following manner to obtain the first number of modification times and the first modification details of the fourth configuration parameter during the time period from sending the alarm notification of poor network quality until the recovery of the network quality: obtaining a change record of the fourth configuration parameter during the time period from sending the alarm notification of poor network quality until the recovery of the network quality; and determining the first number of modification times and the first modification details of the fourth configuration parameter according to the change record of the fourth configuration parameter.

According to the embodiment provided by the present disclosure, the first correlation and the second correlation may be realized in a model-driving manner.

The above apparatus for restoring network quality is the same as the specific implement process of the above method for restoring network quality, and is not described herein again.

It will be understood by those having ordinary skill in the art that all or some of the steps of the methods, functional modules/units in the apparatuses, systems disclosed above may be implemented as software, firmware, hardware, or suitable combinations thereof. In a hardware implement, divisions between functional modules/units mentioned in the above description do not necessarily correspond to divisions of physical components. For example, one physical component may have multiple functions, or one function or step may be performed by several physical components in cooperation. Some or all of the components may be implemented as software executed by a processor, such as a digital signal processor or a microprocessor, or as hardware, or as an integrated circuit, such as an application specific integrated circuit. Such software may be distributed on a computer-readable medium, which may include a computer storage medium (or non-transitory medium), and a communication medium (or transitory medium). The term 'computer storage media' includes volatile and nonvolatile, removable and non-removable mediums implemented in any method or technology for storage of information such as a computer readable instruction, a data structure, a program module or other data, as is well known to those having ordinary skill in the art. The computer storage medium includes, but is not limited to, RAM (Random Access Memory), ROM (Read-Only Memory), EEPROM (Electrically Erasable Programmable Read Only Memory), flash memory or other memory technology, CD-ROM (Compact disk Read-Only Memory), Digital Versatile Disks (DVD) or other optical disk storage, magnetic cassette, magnetic tape, magnetic disk storage or other magnetic storage devices, or any other medium which can be used to store desired information and which can be accessed by a computer. In addition, the communication medium typically contains the computer readable instruction, the data structure, the program module or other data in a modulated data signal such as a carrier wave or other transport mechanism and includes any information delivery medium, as is well known to those having ordinary skill in the art.

Although the examples disclosed by the embodiment of the present disclosure have been described above, the above contents are only the examples adopted for facilitating understanding on the embodiment of the present disclosure, and are not intended to limit the embodiment of the present disclosure. For those having skill in the technical field to which the present disclosure belongs, without departing from the spirit and scope disclosed by the present disclosure, any modifications and changes can be made in the form and details of the implementation, but the patent protection scope of the embodiment of the present disclosure must still be subject to the scope defined by the appended claims.

## Claims

1. A method for restoring network quality, comprising:
for each Key Performance Indicator, KPI, in a pre-set first correlation between KPIs and first constraint conditions, determining whether the KPI satisfies a first constraint condition corresponding to the KPI; and
performing, in response to determining that at least one KPI not satisfying a first constraint condition respectively corresponding to the at least one KPI exists in the first correlation, a network quality recovery process, according to a pre-set second correlation between a second configuration parameter and a second constraint condition, and whether a value of a first configuration parameter in a network element area is the same as a value of the first configuration parameter in a network management or not.

2. The method of claim 1, further comprising: determining, in response to determining that a value of a third configuration parameter in the network management is modified, whether the modification of the value of the third configuration parameter in the network management is effective or not, according to whether the second configuration parameter in the second correlation comprises the third configuration parameter or not.

3. The method of claim 2, further comprising:
storing a change record of the third configuration parameter, in response to determining that the modification of the value of the third configuration parameter in the network management is effective; or
notifying a user that the modification of the value of the third configuration parameter in the network management violates the second correlation, in response to determining that the modification of the third configuration parameter is not effective.

4. The method of claim 2 or 3, wherein determining whether the modification of the value of the third configuration parameter in the network management is effective or not, according to whether the second configuration parameter in the second correlation comprises the third configuration parameter or not comprises at least one of:
determining that the modification of the value of the third configuration parameter in the network management is effective, in response to determining that the second configuration parameter does not comprise the third configuration parameter, or in response to determining that the second configuration parameter comprises the third configuration parameter and the modification of the value of the third configuration parameter in the network management passes verification of a second constraint condition corresponding to the third configuration parameter; and
determining that the modification of the value of the third configuration parameter in the network management is not effective, in response to determining that the second configuration parameter comprises the third configuration parameter and the modification of the value of the third configuration parameter in the network management does not pass the verification of the second constraint condition corresponding to the third configuration parameter.

5. The method of claim 4, wherein a case where the modification of the value of the third configuration parameter in the network management system passes the verification of the second constraint condition corresponding to the third configuration parameter comprises at least one of:
the second constraint condition corresponding to the third configuration parameter being an unconditional default value, and a modified value of the third configuration parameter in the network management being equal to the default value;
the second constraint condition corresponding to the third configuration parameter being an unconditional value range, and the modified value of the third configuration parameter in the network management being in the value range;
the second constraint condition corresponding to the third configuration parameter being a default value with a condition, the condition being satisfied, and the modified value of the third configuration parameter in the network management being equal to the default value; or
the second constraint condition corresponding to the third configuration parameter being a value range with a condition, the condition is satisfied, and the modified value of the third configuration parameter in the network management being in the value range.

6. The method of claim 4, wherein a case where the modification of the value of the third configuration parameter in the network management does not pass the verification of the second constraint condition corresponding to the third configuration parameter comprises at least one of:
the second constraint condition corresponding to the third configuration parameter being an unconditional default value, and a modified value of the third configuration parameter in the network management being unequal to the default value;
the second constraint condition corresponding to the third configuration parameter being an unconditional value range, and the modified value of the third configuration parameter in the network management being not in the value range;
the second constraint condition corresponding to the third configuration parameter being a default value with a condition, the condition is satisfied, and the modified value of the third configuration parameter in the network management being not equal to the default value;
the second constraint condition corresponding to the third configuration parameter being the default value with the condition, and the condition is not satisfied; or
the second constraint condition corresponding to the third configuration parameter being a value range with a condition, the condition is satisfied, and the modified value of the third configuration parameter in the network management being not in the value range.

7. The method of any one of claims 1 to 3, wherein performing the network quality recovery processing, according to the pre-set second correlation between the second configuration parameter and the second constraint condition, and whether the value of the first configuration parameter in the network element area is the same as the value of the first configuration parameter in the network manager or not, comprises at least one of:
for each first configuration parameter, when the value of the first configuration parameter in the network element area is different from the value of the first configuration parameter in the network management area, or, when the second configuration parameter comprises the first configuration parameter and the value of the first configuration parameter in the network element area or the value of the first configuration parameter in the network management does not pass verification of the second constraint condition corresponding to the first configuration parameter, modifying the value of the first configuration parameter in the network element area and/or the value of the first configuration parameter in the network management, so that the value of the first configuration parameter in the network element area is the same as the value of the first configuration parameter in the network management, and the value of the first configuration parameter in the network element area and the value of the first configuration parameter in the network management pass the verification of the second constraint condition corresponding to the first configuration parameter when the second configuration parameter comprises the first configuration parameter; and
sending an alarm notification of poor network quality, when values of all first configuration parameters in the network element area are the same as values of all the first configuration parameters in the network management, and all the first configuration parameters satisfy a pre-set condition; wherein the pre-set condition comprises that the second configuration parameter does not comprise the first configuration parameter, or that the second configuration parameter comprises the first configuration parameter and the value of the first configuration parameter in the network element area and the value of the first configuration parameter in the network management pass the verification of the second constraint condition corresponding to the first configuration parameter;
wherein when a value of the second configuration parameter in the network element area passes verification of a second constraint condition corresponding to the second configuration parameter, the network quality is well affected.

8. The method of claim 7, wherein modifying the value of the first configuration parameter in the network element area and the value of the first configuration parameter in the network management, comprises at least one of:
modifying the value of the first configuration parameter in the network management to be the value of the first configuration parameter in the network element area, when the value of the first configuration parameter in the network element area is different from the value of the first configuration parameter in the network management and the first configuration parameter satisfy a pre-set condition, wherein the pre-set condition comprises that the second configuration parameter does not comprise the first configuration parameter, or that the second configuration parameter comprises the first configuration parameter and the value of the first configuration parameter in the network element area passes the verification of the second constraint condition corresponding to the first configuration parameter;
modifying the value of the first configuration parameter in the network element area to be the value of the first configuration parameter in the network management, when the value of the first configuration parameter in the network element area is different from the value of the first configuration parameter in the network management, the second configuration parameter comprises the first configuration parameter, the value of the first configuration parameter in the network element area does not pass the verification of the second constraint condition corresponding to the first configuration parameter, and the value of the first configuration parameter in the network management passes the verification of the second constraint condition corresponding to the first configuration parameter; or
modifying the value of the first configuration parameter in the network element area and the value of the first configuration parameter in the network management into a value which can pass the verification of the second constraint condition corresponding to the first configuration parameter, when the second configuration parameter comprises the first configuration parameter, and both the value of the first configuration parameter in the network element area and the value of the first configuration parameter in the network management do not pass the verification of the second constraint condition corresponding to the first configuration parameter.

9. The method of claim 7, further comprising:
obtaining, in response to determining that the KPI in the first correlation satisfies the first constraint condition corresponding to the KPI, a first number of modification times and first modification details of a fourth configuration parameter during a time period from sending the alarm notification of poor network quality until recovery of the network quality; and updating a pre-set third correlation among a name, a second number of modification times and second modification details of a configuration parameter according to the first number of modification times and the first modification details of the fourth configuration parameter;
wherein the fourth configuration parameter is a configuration parameter whose value in the network management is modified by the user during the time period from sending the alarm notification of poor network quality until the recovery of the network quality.

10. The method of claim 9, wherein obtaining the first number of modification times and the first modification details of the fourth configuration parameter during the time period from sending the alarm notification of poor network quality until the recovery of the network quality, comprises:
obtaining a change record of the fourth configuration parameter during the time period from sending the alarm notification of poor network quality until the recovery of the network quality; and
determining the first number of modification times and the first modification details of the fourth configuration parameter according to the change record of the fourth configuration parameter.

11. The method of any of claims 1 to 3, wherein the first correlation and the second correlation are implemented in a model-driving manner.

12. An apparatus for restoring network quality, comprising a processor and a computer-readable storage medium having an instruction stored therein, wherein when the instruction is executed by the processor, the method for restoring network quality of any one of claims 1 to 11 is implemented.

13. A computer-readable storage medium having a computer program stored thereon, wherein when the computer program is executed by a processor, steps of the method of restoring network quality of any one of claims 1 to 11 are implemented.

14. An apparatus for restoring network quality, comprising:
a determining module configured to determine whether each Key Performance Indicator, KPI, in a pre-set first correlation between KPIs and first constraint conditions satisfies a first constraint condition corresponding to the KPI; and
a network quality processing module configured to perform, in response to determining that at least one KPI not satisfying a first constraint condition respectively corresponding to the at least one KPI exists in the first correlation, a network quality recovery process, according to a pre-set second correlation between a second configuration parameter and a second constraint condition, and whether a value of a first configuration parameter in a network element area is the same as a value of the first configuration parameter in a network management or not.
